# FASCICULE DE BREVET EUROPEEN

(11) **EP 4 022 171 B1**
(45) Date de publication et mention de la délivrance du brevet: **01.01.2025**
(21) Numéro de dépôt: 20793033.0
(22) Date de dépôt: 01.10.2020
(51) Int. Cl.: F01D 5/14, F01D 17/16, F04D 29/56

(54) **AUBE DE REDRESSEUR À CALAGE VARIABLE COMPORTANT DES AILETTES AÉRODYNAMIQUES**
STATORSCHAUFEL MIT VARIABLER STEIGUNG, DIE AERODYNAMISCHE RIPPEN AUFWEIST
VARIABLE-PITCH STATOR VANE COMPRISING AERODYNAMIC FINS

(30) Priorité: 10.10.2019 FR 1911232
(43) Date de publication de la demande: 06.07.2022
(73) Titulaire: SAFRAN AIRCRAFT ENGINES, 75015 Paris (FR)
(72) Inventeur: SCHOLTES, Christophe, 77550 MOISSY-CRAMAYEL (FR)
(74) Mandataire: Brevalex
(86) Numéro de dépôt international: PCT/FR2020/051723
(87) Numéro de publication internationale: WO 2021/069817

(56) Documents cités:
- FR-A1- 2 432 608
- US-A1- 2012 128 480
- US-A1- 2015 275 916
- US-B1- 6 283 705
- US-B2- 10 287 902

## Description

### DOMAINE TECHNIQUE

L'invention concerne une aube de stator de turbomachine, notamment une aube de redresseur d'un compresseur, qui est conformée pour réduire la formation de tourbillons au niveau du pied ou de la tête de l'aube.

### ÉTAT DE LA TECHNIQUE ANTÉRIEURE

Un étage de compresseur de turbomachine est composé d'une pluralité d'aubes mobiles montées sur un rotor et d'une pluralité d'aubes fixes, réparties autour de l'axe principal du compresseur, qui forment un redresseur.

Le redresseur est destiné à redresser un flux d'air circulant dans la veine primaire, avant qu'il n'entre en contact avec une roue à aubes. Un exemple est divulgué dans la demande de brevet US 6 283 705 B1.

Dans l'optique de l'amélioration de la performance du compresseur, il est important de maîtriser les pertes aérodynamiques qui sont générées dans l'écoulement d'air au travers du compresseur.

Parmi les pertes aérodynamiques, certaines sont générées par des écoulements d'air secondaires, prenant la forme de tourbillons.

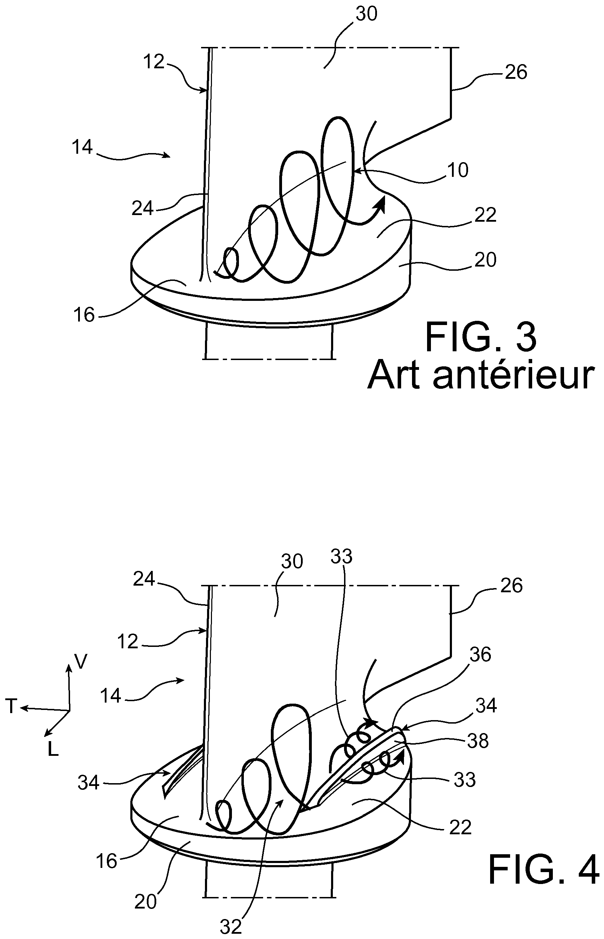

Comme on peut le voir à titre d'exemple à la figure 3, certains tourbillons 10, appelés tourbillons de coin, résultent de l'interaction entre la couche limite s'écoulant le long de la pale 12 d'une aube 14 avec les couches limites s'écoulant le long d'une platine 16 de l'aube 14.

Aussi, certains étages de redresseur comportent des aubes à calage variable, communément désignées par l'acronyme "VSV" pour "Variable Statoric Vane", pour lesquels l'orientation de chaque aube 14 de cet étage, autour de son axe principal est apte à être modifié par un mécanisme approprié.

L'invention a pour but de proposer une aube de redresseur pour un compresseur de turbomachine qui est réalisée pour limiter la formation de ces tourbillons de coin.

### EXPOSÉ DE L'INVENTION

L'invention concerne une aube de stator à calage variable pour un redresseur de compresseur de turbomachine, qui s'étend dans un plan radial longitudinal comportant une platine radialement interne et une platine radialement externe entre lesquelles s'étend au moins une pale,
chaque platine comportant une paroi longitudinale transversale faisant face à l'autre platine,
ladite paroi longitudinale transversale d'au moins une platine comporte au moins une ailette faisant saillie radialement en direction de l'autre platine dans laquelle la pale comporte un premier bord d'extrémité longitudinale amont appelé bord d'attaque et un deuxième bord d'extrémité longitudinale aval appelé bord de fuite, caractérisée en ce que chaque ailette comporte une extrémité longitudinale amont décalée longitudinalement vers l'aval par rapport au bord d'attaque.

La présence des ailettes permet de briser les tourbillons se formant au niveau de la liaison entre la pale et chaque platine.

De préférence, ladite paroi longitudinale transversale comporte plusieurs ailettes réparties transversalement de part et d'autre de la pale.

De préférence, chaque ailette est sensiblement parallèle à la pale et est située transversalement à distance de la pale.

De préférence, la distance longitudinale entre l'extrémité longitudinale amont de chaque ailette et le bord d'attaque est au moins égale à 30% de la longueur longitudinale de la platine.

De préférence, chaque ailette comporte une face d'extrémité radiale qui affleure avec la paroi longitudinale transversale de la platine au niveau de l'extrémité longitudinale amont de l'ailette.

De préférence, la platine comporte une face périphérique s'étendant radialement à partir du bord périphérique de la paroi longitudinale transversale, et chaque ailette comporte une face d'extrémité radiale qui affleure avec la face périphérique de la platine au niveau de l'extrémité longitudinale aval de l'ailette.

De préférence, la section de chaque ailette, selon un plan longitudinal transversal est rectiligne.

De préférence, la section de chaque ailette, selon un plan longitudinal transversal est courbée et présente une courbure similaire à la courbure de la pale.

De préférence, la dimension radiale maximale de chaque ailette est inférieure à 25% de la distance radiale entre les parois longitudinales transversales des platines.

L'invention propose aussi un compresseur de turbomachine d'aéronef comportant un redresseur formé d'une pluralité d'aubes selon l'invention, réparties autour d'un axe principal A du compresseur, avec leurs pales orientées radialement par rapport à l'axe principal A du compresseur, caractérisé en ce que chaque aube est montée mobile en rotation autour de son axe principal radial.

### BRÈVE DESCRIPTION DES DESSINS

[Fig. 1] est une représentation schématique en perspective d'un compresseur de turbomachine comprenant des aubes de stator à calage variable.
[Fig. 2] est un détail à plus grande échelle d'une partie du compresseur représenté à la figure 1, montrant certaines aubes à calage variable.
[Fig. 3] est un détail d'une extrémité d'une aube à calage variable selon l'art antérieur, montrant la formation de tourbillons au niveau de la liaison entre la pale et une platine.
[Fig. 4] est une vue similaire à celle de la figure 3, représentant une aube selon l'invention.
[Fig. 5] est une vue de dessus de la partie d'aube représentée à la figure 4, montrant deux ailettes sur la platine.
[Fig. 6] est une vue latérale de l'aube représentée aux figures 4 et 5.

### DESCRIPTION DE MODES DE RÉALISATION

Pour la description de l'invention, on adoptera à titre non limitatif les orientations radiale, longitudinale et transversale selon le repère R, L, T indiqué aux figures.

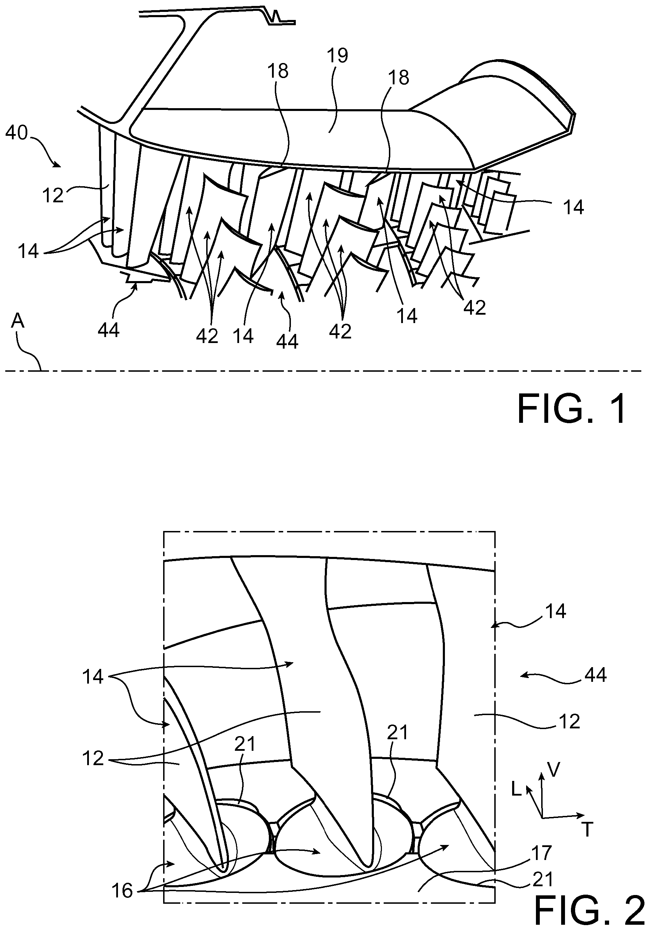

On a représenté à la figure 1 une partie d'une turbomachine, notamment un compresseur haute ou basse pression. Ce compresseur 40 possède un axe principal A s'étendant selon la direction principale longitudinale de la turbomachine.

Le compresseur 40 comporte plusieurs étages dont chacun comporte un ensemble d'aubes mobiles 42 portées par un disque de rotor et une pluralité d'aubes 14 de stator formant un redresseur 44 destiné à réorienter le flux d'air selon la direction principale axiale du compresseur.

L'orientation principale de chaque aube 14 du redresseur 44 est radiale par rapport à l'axe principal A du compresseur 40, c'est-à-dire que chaque aube s'étend selon la direction radiale R perpendiculaire à la direction longitudinale L.

Il sera compris que l'aube peut être légèrement inclinée par rapport à la direction radiale R, du fait de l'inclinaison locale de la veine d'écoulement d'air dans laquelle l'aube 14 est située.

Le redresseur 44 est du type à calage variable, c'est-à-dire que chaque aube 14 de stator est mobile en pivotement autour de son axe principal, qui s'étend ici selon la direction radiale R, pour modifier son inclinaison par rapport à un plan défini par la direction longitudinale L et la direction radiale R de l'aube 14, c'est-à-dire par rapport au sens d'écoulement global du flux d'air dans le compresseur 40. Il sera compris que toutes les aubes 14 de stator de la turbomachine ne sont pas à calage variable. Ainsi, seules les aubes 14 de redresseur des premiers étages du compresseur 40 sont mobiles, les aubes constituant les autres redresseurs sont fixes dans le redresseur.

Dans la description qui va suivre on fera uniquement référence à une aube 14 mobile, c'est-à-dire une aube à calage variable. Par conséquent, on utilisera uniquement la dénomination aube 14 pour décrire cette aube 14 mobile.

Il sera compris que lors d'un pivotement de l'aube 14 dans le compresseur 40, le repère R, L, T qui lui est associé pivote de façon identique autour de la direction radiale R.

Comme on peut le voir plus en détails à la figure 2, chaque aube 14 comporte une platine radialement interne 16 qui délimite, avec une paroi fixe 17 du compresseur 40, la partie radialement interne de la veine d'écoulement d'air.

L'aube 14 comporte aussi une platine radialement externe 18 (visible à la figure 1), qui délimite, avec une paroi fixe 19 du compresseur 40, la partie radialement externe de la veine d'écoulement d'air.

Puisque l'aube 14 est une aube à calage variable, chaque platine 16, 18 est en forme principale d'un disque coaxial à l'axe radial de rotation de l'aube 14 par rapport aux plateformes fixes du compresseur.

Chaque platine 16, 18 comporte une paroi périphérique 20 annulaire qui est centrée sur l'axe radial de rotation et qui est située dans un orifice circulaire complémentaire 21 formé dans la plateforme fixe associée.

Chaque platine 16, 18 comporte aussi une paroi longitudinale transversale 22 qui s'étend principalement longitudinalement et transversalement et qui fait face à l'autre platine 16, 18.

Chaque paroi longitudinale transversale 22 s'étend principalement dans le prolongement de la paroi annulaire de la plateforme associée, pour reconstituer la veine de circulation d'air.

L'aube 14 comporte une pale 12 qui s'étend selon l'axe principal de l'aube 14, c'est-à-dire ici dans la direction radiale R entre les deux platines 16, 18.

La pale 12 comporte un bord d'extrémité longitudinale amont 24 communément appelé bord d'attaque, un bord d'extrémité longitudinale aval 26 communément appelé bord de fuite, une paroi d'intrados 28 et une paroi d'extrados 30 qui délimitent transversalement la pale 12 et qui s'étendent longitudinalement entre le bord d'attaque 24 et le bord de fuite 26 et radialement entre les deux parois longitudinales transversales 22 des platines 16, 18.

Lors du fonctionnement de la turbomachine, et comme on peut le voir à la figure 4, la circulation d'air dans la veine produit des perturbations 32 au niveau de la liaison entre chaque extrémité radiale de la pale 12 et la paroi longitudinale transversale 22 d'une platine 16, 18, c'est-à-dire au niveau de la liaison entre la paroi d'intrados 28 ou la paroi d'extrados 30 avec la paroi longitudinale transversale 22 d'une platine 16, 18. Ici, seules les perturbations entre la paroi d'extrados 30 et la paroi longitudinale transversale 22 de la platine 16 radialement interne ont été représentées.

Ces perturbations 32, qui prennent la forme de tourbillons, ont tendance à s'amplifier selon le sens d'écoulement, c'est-à-dire de l'amont vers l'aval, c'est-à-dire qu'elles sont plus importantes en se rapprochant du bord de fuite de la pale 12.

Pour limiter l'expansion des perturbations 32 vers l'aval, et comme on peut le voir aux figures 4 à 6, chaque paroi longitudinale transversale 22 d'une platine 16, 18, comporte au moins une ailette 34 qui s'étend en faisant saillie par rapport à ladite paroi longitudinale transversale 22 selon la direction radiale.

L'ailette 34 forme un obstacle à l'écoulement tourbillonnaire se formant au niveau de la platine 16, empêchant la perturbation 32 de se développer davantage, voire provoquant la formation de plusieurs perturbations 33 de moindre amplitude.

Selon un mode de réalisation préféré représenté aux figures, la paroi longitudinale transversale 22 de la platine 16 comporte deux ailettes 34 qui sont réparties transversalement de part et d'autre de la pale 12. Il sera compris que l'invention n'est pas limitée à ce mode de réalisation, et qu'un nombre différent d'ailettes 34 peut être disposé à l'un ou l'autre côté de la pale 12.

Chaque ailette 34 s'étend sensiblement parallèlement à la pale 12, c'est-à-dire dans un plan parallèle aux directions longitudinale L et verticale V dans le mode représenté aux figures.

L'ailette est située transversalement en face de la paroi d'intrados 28 ou de la paroi d'extrados 30 et elle s'étend transversalement à distance de cette paroi 28, 30 de la pale 12.

La section de chaque ailette 34 selon un plan longitudinal transversal peut être rectiligne, ou bien courbée, et dans ce cas, la courbure de l'ailette 34 est similaire à la courbure de la paroi d'intrados 28 ou de la paroi d'extrados 30, à côté de laquelle l'ailette 34 est située. Ainsi, dans le dernier cas, l'ailette 34 suit le sens d'écoulement du flux d'air dans le redresseur.

Chaque ailette 34 est délimitée par une face d'extrémité radiale 36 et deux faces latérales 38 qui sont séparées l'une de l'autre par la face d'extrémité radiale 36. La section de l'ailette 34 selon un plan radial transversal, c'est à dire selon les directions R, T est ainsi sensiblement rectangulaire.

Selon une variante de réalisation, les angles vifs des arêtes de chaque ailette 34 sont remplacés par des congés, formant ainsi une ailette 34 à bords arrondis.

Les faces latérales sont de préférence parallèles l'une à l'autre et parallèles à la direction radiale R de l'aube 14.

La dimension radiale de l'ailette 34 est variable et croissante selon la direction longitudinale. La face d'extrémité radiale 36 est de préférence bombée selon la direction radiale

De préférence, la dimension radiale maximale de chaque ailette est inférieure à 25% de la dimension radiale de la pale 12, c'est-à-dire inférieure à 25% de la distance radiale entre les parois longitudinales transversales 22 des platines 16, 18.

Cette dimension radiale est suffisante pour lutter contre les tourbillons, qui sont du même ordre de dimension que cette dimension radiale, sans trop affecter l'écoulement ailleurs.

La face d'extrémité radiale 36 affleure avec la paroi longitudinale transversale 22 de la platine 16 au niveau de l'extrémité longitudinale amont de l'ailette 34. Cela permet d'éviter d'avoir un effet de "marche montante", qui serait néfaste pour le rendement de la turbomachine.

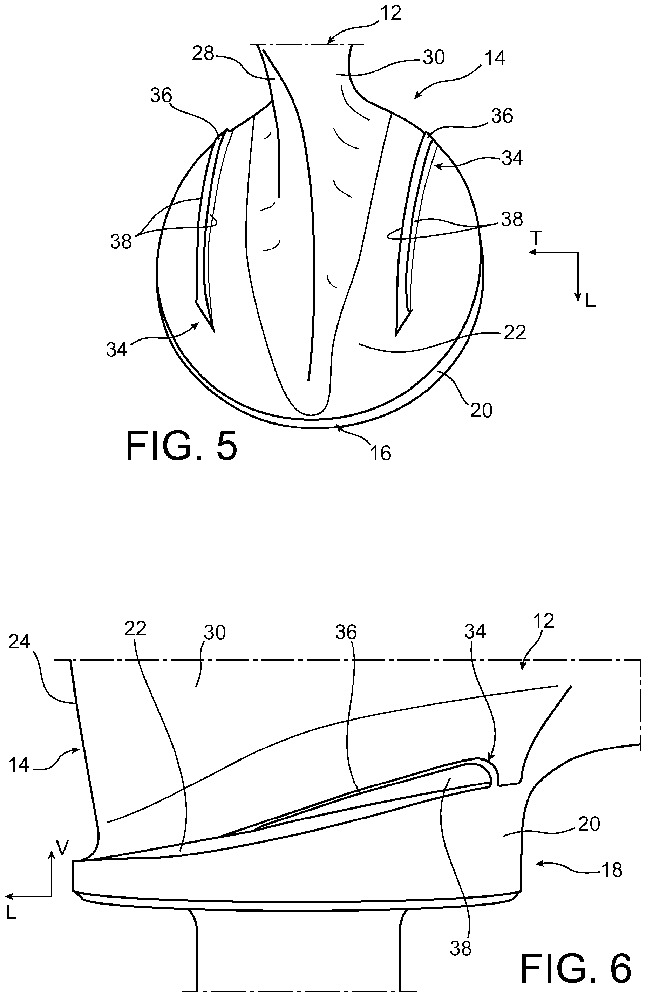

De plus, comme on peut le voir à la figure 6, à l'extrémité longitudinale aval de l'ailette 34, c'est-à-dire à l'extrémité aval de l'ailette (34), la face d'extrémité radiale 36 est recourbée pour s'étendre principalement radialement et affleurer avec la paroi périphérique 20 de la platine 16.

Ainsi, à chacune de ses extrémités longitudinales, la face d'extrémité radiale 36 affleure, ou est dans le prolongement de la paroi longitudinale transversale 22 ou de la paroi périphérique 20 de la platine 16.

Il n'y a alors aucun décrochage entre la face d'extrémité radiale 36 de l'ailette 34 et la paroi longitudinale transversale 22 ou la paroi périphérique 20 de la platine 16, ce qui permet d'éviter la formation de perturbations supplémentaires qui pourraient nuire aux performances de l'aube 14.

Dans le but de limiter les perturbations dans l'écoulement d'air qu'une ailette peut produire, l'extrémité longitudinale amont de chaque ailette 34 est décalée longitudinalement vers l'aval par rapport au bord d'attaque 24 de la pale 12.

De préférence, ce décalage longitudinal vers l'aval est au moins égal à 30% de la longueur longitudinale de la platine 16.

La zone située au niveau du bord d'attaque 24 de la pale 12 est une zone dans laquelle le flux d'air n'est pas encore totalement orienté parallèlement à l'aube. Une zone de blocage aérodynamique (à fort Mach) peut apparaître à proximité du bord d'attaque 24 pour certains points de fonctionnement, il faut donc éviter les ressauts dans cette zone. Comme on l'a dit précédemment, l'aube 14 est mobile en rotation par rapport au stator du compresseur autour d'un axe radial.

Puisque les ailettes 34 sont montées sur la platine 16, les ailettes 34 sont elles aussi mobiles en rotation de manière solidaire de l'aube 14, garantissant une bonne efficacité du redressement du flux d'air dans le compresseur et de la réduction des perturbations 32 communément appelées "tourbillons de coin".

Selon un mode de réalisation préféré, chaque ailette 34 est réalisée venue de matière avec la platine 16 qui lui est associée.

Cette réalisation peut être par moulage ou tout autre mode de réalisation, comme par exemple par technologie additive.

La description qui vient d'être faite pour une ou deux ailettes s'applique aux ailettes qui sont portées par la platine 16 située à l'extrémité radiale interne de la pale 12. Il sera compris que cette description s'appliquera à l'identique pour chaque ailette 34 qui est portée par la platine 18 située à l'extrémité radiale externe de la pale 12.

## Revendications

1. Aube (14) de stator à calage variable pour un redresseur (44) de compresseur de turbomachine, qui s'étend dans un plan radial longitudinal comportant une platine (16) radialement interne et une platine (18) radialement externe entre lesquelles s'étend au moins une pale (12),
chaque platine (16, 18) comportant une paroi longitudinale transversale (22) faisant face à l'autre platine (16, 18),
dans laquelle ladite paroi longitudinale transversale (22) d'au moins une platine (16, 18) comporte au moins une ailette (34) faisant saillie radialement en direction de l'autre platine (16, 18),
dans laquelle la pale (12) comporte un premier bord d'extrémité longitudinale amont (24) appelé bord d'attaque et un deuxième bord d'extrémité longitudinale aval (26) appelé bord de fuite,
**caractérisée en ce que** chaque ailette (34) comporte une extrémité longitudinale amont décalée longitudinalement vers l'aval par rapport au bord d'attaque (24).

2. Aube (14) selon la revendication précédente, **caractérisée en ce que** ladite paroi longitudinale transversale (22) comporte plusieurs ailettes (34) réparties transversalement de part et d'autre de la pale (12).

3. Aube (14) selon l'une quelconque des revendications précédentes, **caractérisée en ce que** chaque ailette (34) est sensiblement parallèle à la pale (12) et est située transversalement à distance de la pale (12).

4. Aube (14) selon l'une quelconque des revendications précédentes, **caractérisée en ce que** la distance longitudinale entre l'extrémité longitudinale amont de chaque ailette (34) et le bord d'attaque (24) est au moins égale à 30% de la longueur longitudinale de la platine (16, 18).

5. Aube (14) selon l'une quelconque des revendications précédentes, **caractérisée en ce que** chaque ailette (34) comporte une face d'extrémité radiale (36) qui affleure avec la paroi longitudinale transversale (22) de la platine (16, 18) au niveau de l'extrémité longitudinale amont de l'ailette (34).

6. Aube (14) selon l'une quelconque des revendications précédentes, dans laquelle la platine (16, 18) comporte une face périphérique (20) s'étendant radialement à partir du bord périphérique de la paroi longitudinale transversale (22),
**caractérisée en ce que** chaque ailette (34) comporte une face d'extrémité radiale (36) qui affleure avec la face périphérique de la platine (16, 18) au niveau de l'extrémité longitudinale aval de l'ailette (34).

7. Aube (14) selon l'une quelconque des revendications précédentes, **caractérisée en ce que** la section de chaque ailette (34), selon un plan longitudinal transversal est rectiligne.

8. Aube (14) selon l'une quelconque des revendications 1 à 6, **caractérisée en ce que** la section de chaque ailette (34), selon un plan longitudinal transversal est courbé et présente une courbure similaire à la courbure de la pale (12).

9. Aube (14) selon l'une quelconque des revendications précédentes, **caractérisée en ce que** la dimension radiale maximale de chaque ailette (34) est inférieure à 25% de la distance radiale entre les parois longitudinales transversales des platines (16, 18).

10. Compresseur de turbomachine d'aéronef comportant un redresseur (44) formé d'une pluralité d'aubes (14) selon l'une quelconque des revendications précédentes, réparties autour d'un axe principal (A) du compresseur, avec leurs pales (12) orientées radialement par rapport à l'axe principal (A) du compresseur,
**caractérisé en ce que** chaque aube (14) est montée mobile en rotation autour de son axe principal radial.

## Patentansprüche

1. Statorschaufel (14) mit variabler Verstellung für einen Verdichter-Gleichrichter (44) einer Turbomaschine, die sich in einer radialen Längsebene erstreckt und eine radial innere Platte (16) und eine radial äußere Platte (18) umfasst, zwischen denen sich mindestens ein Schaufelblatt (12) erstreckt,
wobei jede Platte (16, 18) eine quer verlaufende Längswand (22) umfasst, die der anderen Platte (16, 18) zugewandt ist,
wobei die quer verlaufende Längswand (22) mindestens einer Platte (16, 18) mindestens einen Steg (34) umfasst, der radial in Richtung der anderen Platte (16, 18) vorsteht,
wobei das Schaufelblatt (12) eine erste stromaufwärtige Längsendkante (24), als Vorderkante bezeichnet, und eine zweite stromabwärtige Längsendkante (26), als Hinterkante bezeichnet, umfasst,
**dadurch gekennzeichnet, dass** jeder Steg (34) ein stromaufwärtiges Längsende umfasst, das in Bezug auf die Vorderkante (24) in Längsrichtung stromabwärts versetzt ist.

2. Schaufel (14) nach dem vorhergehenden Anspruch, **dadurch gekennzeichnet, dass** die quer verlaufende Längswand (22) mehrere Stege (34) umfasst, die in Querrichtung auf beiden Seiten des Schaufelblatts (12) verteilt sind.

3. Schaufel (14) nach einem der vorhergehenden Ansprüche, **dadurch gekennzeichnet, dass** jeder Steg (34) im Wesentlichen parallel zum Schaufelblatt (12) verläuft und sich in Querrichtung in einem Abstand von dem Schaufelblatt (12) befindet.

4. Schaufel (14) nach einem der vorhergehenden Ansprüche, **dadurch gekennzeichnet, dass** der Längsabstand zwischen dem stromaufwärtigen Längsende jedes Stegs (34) und der Vorderkante (24) mindestens 30 % der Längslänge der Platte (16, 18) beträgt.

5. Schaufel (14) nach einem der vorhergehenden Ansprüche, **dadurch gekennzeichnet, dass** jeder Steg (34) eine radiale Endfläche (36) umfasst, die bündig mit der quer verlaufenden Längswand (22) der Platte (16, 18) am stromaufwärtigen Längsende des Stegs (34) abschließt.

6. Schaufel (14) nach einem der vorhergehenden Ansprüche, wobei die Platte (16, 18) eine Umfangsfläche (20) umfasst, die sich radial von der Umfangskante der quer verlaufenden Längswand (22) erstreckt,
**dadurch gekennzeichnet, dass** jeder Steg (34) eine radiale Endfläche (36) umfasst, die bündig mit der Umfangsfläche der Platte (16, 18) am stromabwärtigen Längsende des Stegs (34) abschließt.

7. Schaufel (14) nach einem der vorhergehenden Ansprüche, **dadurch gekennzeichnet, dass** der Querschnitt jedes Stegs (34) entlang einer transversalen Längsebene geradlinig ist.

8. Schaufel (14) nach einem der Ansprüche 1 bis 6, **dadurch gekennzeichnet, dass** der Querschnitt jedes Stegs (34) entlang einer transversalen Längsebene gekrümmt ist und eine ähnliche Krümmung wie die Krümmung des Schaufelblatts (12) aufweist.

9. Schaufel (14) nach einem der vorhergehenden Ansprüche, **dadurch gekennzeichnet, dass** die maximale radiale Abmessung jedes Stegs (34) weniger als 25 % des radialen Abstands zwischen den quer verlaufenden Längswänden der Platten (16, 18) beträgt.

10. Verdichter für eine Flugzeugturbomaschine, umfassend einen Gleichrichter (44), der aus einer Vielzahl von Schaufeln (14) nach einem der vorhergehenden Ansprüche ausgebildet ist, die um eine Hauptachse (A) des Verdichters verteilt sind, wobei deren Schaufelblätter (12) in Bezug auf die Hauptachse (A) des Verdichters radial ausgerichtet sind,
**dadurch gekennzeichnet, dass** jede Schaufel (14) drehbeweglich um ihre radiale Hauptachse montiert ist.

## Claims

1. Variable-pitch stator vane (14) for a turbine engine compressor stator (44), which extends in a longitudinal radial plane including a radially inner plate (16) and a radially outer plate (18) between which at least one blade (12) extends,
each plate (16, 18) including a transverse longitudinal wall (22) facing the other plate (16, 18),
wherein said transverse longitudinal wall (22) of at least one plate (16, 18) includes at least one fin (34) protruding radially towards the other plate (16, 18),
wherein the blade (12) includes a first upstream longitudinal end edge (24) referred to as the leading edge and a second downstream longitudinal end edge (26) referred to as the trailing edge,
**characterised in that** each fin (34) includes an upstream longitudinal end longitudinally offset downstream in relation to the leading edge (24).

2. Vane (14) according to the preceding claim, **characterised in that** said transverse longitudinal wall (22) includes several fins (34) distributed transversally on either side of the blade (12).

3. Vane (14) according to any one of the preceding claims, **characterised in that** each fin (34) is substantially parallel with the blade (12) and is located transversally at a distance from the blade (12).

4. Vane (14) according to any one of the preceding claims, **characterised in that** the longitudinal distance between the upstream longitudinal end of each fin (34) and the leading edge (24) is at least equal to 30% of the longitudinal length of the plate (16, 18).

5. Vane (14) according to any one of the preceding claims, **characterised in that** each fin (34) includes a radial end face (36) which is flush with the transverse longitudinal wall (22) of the plate (16, 18) at the upstream longitudinal end of the fin (34).

6. Vane (14) according to any one of the preceding claims, wherein the plate (16, 18) includes a peripheral face (20) extending radially from the peripheral edge of the transverse longitudinal wall (22),
**characterised in that** each fin (34) includes a radial end face (36) which is flush with the peripheral face of the plate (16, 18) at the downstream longitudinal end of the fin (34).

7. Vane (14) according to any one of the preceding claims, **characterised in that** the cross-section of each fin (34), along a transverse longitudinal plane is rectilinear.

8. Vane (14) according to any one of claims 1 to 6, **characterised in that** the cross-section of each fin (34), along a transverse longitudinal plane is curved and has a similar curvature to the curvature of the blade (12).

9. Vane (14) according to any one of the preceding claims, **characterised in that** the maximum radial dimension of each fin (34) is less than 25% of the radial distance between the transverse longitudinal walls of the plates (16, 18).

10. Aircraft turbine engine compressor including a stator (44) formed from a plurality of vanes (14) according to the preceding claims, distributed about a main axis (A) of the compressor, with the blades (12) thereof radially oriented in relation to the main axis (A) of the compressor,
**characterised in that** each blade (14) is movably mounted in rotation about the radial main axis thereof.
